# EUROPEAN PATENT SPECIFICATION

(11) **EP 1 228 010 B1**
(45) Date of publication and mention of the grant of the patent: **09.04.2008**
(21) Application number: 00972711.6
(22) Date of filing: 28.09.2000
(51) Int. Cl.: C03B 37/05, D04H 3/05, D04H 1/70, D04H 13/00

(54) **Compressed, packaged roll of MMVF batt and fabrication process of roll and MMVF web**
Glasfaserbahnrolle und Herstellungsverfahren von Rolle und Glasfaserbahn
Rouleau de bande en fibres vitreuses et procédé pour fabriquer un tel rouleau et une bande en fibres vitreuses

(30) Priority: 28.09.1999 EP 99119021; 14.08.2000 GB 0019999
(43) Date of publication of application: 07.08.2002
(73) Proprietor: Rockwool International A/S, 2640 Hedehusene (DK)
(72) Inventor: GROVE-RASMUSSEN, Svend, DK-4000 Roskilde (DK)
(74) Representative: Lawrence, Peter Robin Broughton
(86) International application number: PCT/EP2000/009913
(87) International publication number: WO 2001/023312

(56) References cited:
- WO-A-92/10602
- WO-A-96/36573
- WO-A-99/47766
- WO-A-99/51535
- DE-A- 3 501 897
- US-A- 3 740 282
- US-A- 4 114 530
- US-A- 5 093 069
- US-A- 5 906 669

## Description

This invention relates to bonded man-made vitreous fibre (MMVF) batts of relatively low density such as 10-50kg/m³. Such batts are conventionally used as thermal insulation, for instance as insulation in walls, roofs and ceilings.

Batts of this type, sometimes called "Fibre Mats or Fasermatte" may be supplied as flat mats in a compressed state or an uncompressed state. Alternatively they may be supplied in the form of a roll. Each roll is usually packaged under compression so that the product which is supplied is a compressed and packaged roll, which thus expands when the packaging is removed and the roll becomes unwound.

The batts may be made as a single layer, by collecting fibres to the required depth and curing binder on the fibres to form the batt in a single operation (see for instance FR 8302897). Alternatively, the batt may be formed of a cured entangled stack of layers each of which is formed of a continuous air laid MMVF web (see for instance EP-A-297111 and DE-A-3501897).

In one type of batt, the faces of the stack extend in the X and Y axes. The layers are arranged such that the side edges of the batt are defined by side edges of the layers and these extend substantially along the Y axis and are inclined to the faces, end edges of the batt extend substantially along the X axis and are defined by end edges of the layers substantially parallel to the faces and other end edges of the layers extend between the side edges across the faces of the batt at substantially regularly spaced apart positions. This invention relates to low density batts of this type.

When a batt of this type is supplied as a compressed and packaged roll whose axis extends substantially along the X axis, it tends to suffer deterioration in its tensile strength and other physical properties and in its appearance. This is a result of the compression, packaging, handling, transport and storage. In particular, when such a batt is unwound from the package disruptions in the internal and surface structure of the batt are often clearly apparent to the naked eye and the tensile strength in the length direction (along the Y axis) is undesirably less than the tensile strength of the batt before it was rolled. This deterioration in properties in a compressed rolled batt is generally much greater than the deterioration which generally occurs when the batt is packaged flat and is probably due to the combined effect of compression and bending.

An object of the invention is to minimise this deterioration in visual and physical properties as a result of compression and packaging of the low density batt as a roll.

Another problem that arises with such batts is that their visual and physical properties tend to deteriorate when the manufacture is conducted in a manner which is intended to be more economic and productive.

One way of improving the economics of the process of manufacture is to increase the rate of flow of melt on to the fiberising apparatus which is used for forming the fibres which are collected as the air laid MMVF web, which provides each of the individual layers. Unfortunately we have found that increasing production in this way tends to worsen the physical properties and the appearance of a compressed packaged roll of batt made from such web.

Another object of the invention therefore is to be able to increase the productivity of the process for making the batt without suffering deterioration in the quality of the final product. Indeed, the preferred object of the invention is to allow for an increase in the quality of the final product, despite increased rates of production.

The conventional way of forming an air laid web is to convert mineral melt into fibres, for instance using a centrifugal cascade spinner, which are carried as a cloud in air towards a collector on which they are collected as a web. The collector carries the web away from the collection position. The rate of production increases if the amount of melt (tons per hour) is increased but we find this tends to worsen batt and roll properties if the web speed is unchanged.

Increasing the speed would allow the individual layers of web to be thinner, at any given rate of production. However, in modern plants the web is already travelling fast and it tends to be impracticable to increase its speed significantly. Increasing the speed introduces serious engineering problems including the application of large forces to the weak web and consequential formation of holes and folds. Increasing the speed also increases difficulties with the cross lapping which is usually used to convert the primary web into the stack of layers.

This is particularly the case in those plants where the web has to be turned in its travel from the original collection point to the point where it is formed into a stack and thus into the batt. In many processes, the web has to be turned through 90° on a turntable. Performing this at high speed can be a particular problem. Another problem arises with the apparatus used for forming the stack from the web, which is usually a cross lapping apparatus. If this travels very fast, then there can be major engineering problems in controlling the cross lapping device.

It would be desirable to minimise these manufacturing problems while maintaining good productivity and making compressed package rolls of high quality.

The web is normally formed to a width of up to 2 metres. There have been a few, isolated, references in the literature to forming the web to greater widths, for instance 2.5 metres in DE-A-3501897. Also, there have been proposals to have a plurality of spinners, for instance three spinners, in side-by-side relationship. Examples are in WO92/12939 and WO92/12940. Since in this type of apparatus each spinner usually occupies about ¾ metre, if those spinners operated on to a single collector, they would need a collector of between about 2 metres and 2.5 metres. In WO99/51535 (published 14 October 1999) a triple spinner arrangement is shown and it is stated that the spinning chamber (and presumably therefore the web) is either 2.5 or 4 metres wide.

Despite these occasional references to web widths of 2.5 metres, the engineering problems associated with, especially, turning the web, combined with the general cost of providing a wider conveyor, have all tended to lead away from changing from the normal web widths of up to 2 metres. No technical advantage for going to a wider width has been proposed.

In the present invention, we have found that it is possible to improve productivity and quality, and in particular it is possible to make compressed and packaged rolls of the type described above of improved quality, by providing the web as pieces having longer length (in the Y direction of the batt and the roll) than is conventional. In the preferred system, this is achieved by forming the batt from a web which is at least 2.5 metres wide, and preferably more, the layers of web then being arranged in the stack such that the width direction of the web extends substantially along the Y axis (the length direction) of the batt and the roll.

The quality of an unrolled batt does, of course, depend in part on the melt and fiberising conditions and fibre collection conditions which are being used. As a generality we find that the visual appearance and fibre quality improves as the web width is increased and, in particular, that the quality is maintained or improved as the overall productivity is increased, for instance by increasing significantly the tons per hour of melt which is being fiberised, if the web width is increased.

In one aspect of the invention we provide a compressed and packaged roll of low density bonded, man-made vitreous fibre (MMVF) batt which has upper and lower faces which extend in the X and Y axes, end edges extending substantially along the X axis and side edges extending substantially along the Y axis and which is formed of a cured entangled stack of layers each of which is formed of a continuous cross lapped, air laid MMVF web including a bonding agent, and wherein
the side edges of the layers are inclined to the faces and define the side edges of the batt,
the end edges of the batt are defined by end edges of the layers and these end edges are substantially parallel to the faces,
other edges of the layers extend between the side edges across the faces at substantially regularly spaced apart positions,
and the axis of the roll extends substantially along the X axis,
characterised in that the number of end edges in each face is 0.4n or less, per metre, where n is the average number of layers in the Z axis, i.e., in the perpendicular direction through the stack.

The requirement that the number of end edges in each face is 0.4n or less is an indication that the length along the Y axis of each layer is 2.5 metres or more. The length of each layer in the Y axis is generally provided by the width of the web which is laid across the batt to form the stack. The width of the web is at least (and usually above) 2.5 metres. It is usually at least 2.75 metres so that the number of end edges per metre is about 0.36n or less. Preferably the web width is at least 3 metres. Best results, from a performance and economic point of view, are achieved with the number of end edges per metre being 0.167n to 0.333n, corresponding to web widths of 3 metres to 6 metres, but widths up to 7 metres or even 8 metres can be used, so that the number of edges per metre is down to 0.125n. Indeed, from the point of view of the product, there is no upper limit on the web width or lower limit on the number of end edges per metre.

The average number of layers in the stack, n, is usually at least 5 and preferably at least 6. Often it is 10 or more. It may be up to 20 or 25, but can be higher.

It is desirable that each layer should have a relatively low weight per unit area and so is normally below 750 g/m² and generally each layer has a weight of below 550g/m², usually 500g/m² or less. If the weight per unit area is too low, it may be difficult to convey the web satisfactorily on its way to the formation of the batt, and so generally the web has a weight of at least 100g/m². Generally it is at least 150 or 200g/m² up to 300, 350 or 400g/m².

The batt generally has a length in the Y axis of at least 2.5 or 2.75 metres and often at least 3 or 4 metres, for instance up to 5, 6 or even 8 metres. It can be longer than this, but usually it is inconvenient and bulky for the batt to be too long. Its width dimension, in the X axis, can be greater than its Y dimension, but it is usually the same as or less than its Y dimension, typically from 0.5 to 2.25 metres.

The roll preferably has at least one of the layers extending through the entire length from one end edge to the other. For the first time, it is now possible to make rolls having a length of at least 2.5, and generally at least 2.75 or 3 metres, with at least one layer extending the entire length. For instance if the web is 3 metres wide then the roll can be 3 metres long and will have one layer extending the entire length. Preferably at least two of the layers extend to the entire length.

The batt which is wound into a roll is usually cut from a continuous batt which is usually formed by stacking the layers on to one another on a conveyor which moves continuously through the stacking position.

Each layer in the stack must be continuous in the sense that it is a continuous web extending throughout the entire layer. Each layer may be preformed as a layer which is cut to the desired size and then the layers are stacked one upon the other. For instance the layers may all be cut to the same length and width from a web of the chosen size and then laid one upon the other on a continuously moving conveyor, so that the side edges of the layers are inclined to the faces of the conveyor, and thus of the eventual stack and continuous batt. The substantially regular spacing of the end edges is then usually substantially uniform spacing of parallel end edges.

Preferably, however, the layers are provided by a substantially continuous, cross lapped, web. In this embodiment the substantially regular spacing is shown by a zig zag arrangement of the end edges in each face of the continuous batt.

The individual layers become entangled with each other as a result of the layers of web being laid on to each other and the resultant stack then being subjected to compression.

In order that the binder is (as is preferred) substantially uniformly distributed throughout the batt, it is usual for the binder to be distributed uniformly throughout each web. The binder can be any suitable binder for MMVF products and is usually a curable, organic, polymeric binder such as a phenolic resin binder. The total amount of binder is generally in the range 0.5 to 5% by weight of the batt, and this conveniently is determined, in any particular product, by observing that the "ignition loss" is from 0.5 to 5%, generally about 1 to 3%. The ignition loss is the loss of weight when a fully dried batt is subject to ignition so as to burn off organic components.

The continuous batt is cut across its width to define the end edges of the batt which is to be rolled. This therefore exposes end edges of the layers in these cut ends, which extend in the X and Z axes of the cut batt. The continuous batt may be cut lengthwise to define the side edges of the batt which is to be rolled. These cut edges extend in the Y and Z axes.

The web may be made of any conventional vitreous melt (glass, stone or rock). The melt may be fiberised by any convenient fiberising technique, usually a centrifugal fiberising technique. This can be by a fiberising cup but preferably it is by a centrifugal cascade process.

A preferred process according to the invention for making packaged rolls of bonded, low-density, man-made vitreous fibre batt comprises
pouring mineral melt onto the first rotor of one or more centrifugal cascade spinners each comprising a first rotor and one or more subsequent rotors which are rotating about substantially horizontal axes and thereby forming a cloud of fibres,
including curable binder in the cloud,
carrying the cloud forwards from the spinner in a stream of air,
collecting the cloud of fibres as a web on a substantially continuous moving collector and transporting the web to a cross lapping position,
cross lapping a plurality of layers of the web while substantially continuously conveying the resultant batt away from the cross lapping position along the Y axis of the batt,
curing the binder,
cutting the batt before, during or after curing, into pieces having a length L metres along the Y axis, and
compressing and rolling the cured pieces into rolls whose axis extends substantially along the X axis of the batt, and packaging each roll while compressed,
characterised in that the web and the collector assembly both have a width of at least L, and L is at least 3. metres, preferably 4 to 8 metres.

Generally L is at least 2.8 or 3 metres in that usually the roll is at least 3 metres long and the web (and the collector) is at least 3 metres wide. Generally the web (and the collector) are from 4 to 7 or 8 metres.

A centrifugal cascade spinner is a well known fiberising apparatus and comprises a set of rotatable rotors consisting of a first rotor and one or more subsequent rotors wherein each rotor is mounted for rotation about a substantially horizontal axis whereby melt poured on to the first rotor is thrown on to each subsequent rotor in sequence with melt being thrown off the subsequent rotors, and optionally also off the first rotor, as fibres.

Usually there are primary air supply means for blasting air through the spinner substantially axially forwards across the surface of the or each subsequent rotor, preferably substantially as a wall jet. This promotes formation of the fibres and contributes to transport of the fibres away from the rotor surfaces. Additionally, secondary air is usually supplied around the spinner to carry the cloud of fibres forwards from the spinner towards the collector. Suitable spinners are described in WO92/06047, WO92/12939 and WO92/12940.

In order to maximise productivity, it is preferred that at least two of the cascade spinners should be arranged in side-by-side relationship whereby a single cloud of fibres is formed from the two or more spinners and carried forward and collected on a single collector having the desired width. In such processes, melt is poured simultaneously on to the top rotor of each of the spinners. Each spinner preferably receives at least 3t/h (tons per hour) melt and generally at least 5t/h. Generally the amount fed on to each spinner is not above about 8 or 10t/h. The combined amount of melt fed on to the spinners is generally at least 10t/h and preferably at least 14t/h. Even when there are three or four spinners in side-by-side relationship it is generally unnecessary to aim for a rate of more than about 20 or 25t/h, since increasing the throughput increases the difficulty of operating the process in a controllable manner to give products of consistent quality. Preferably at least three spinners are arranged in side-by-side relationship. The individual controls of these may be conducted independently so as to allow independent optimisation of the batt through its thickness, as described in WO99/51535 (published 14 October 1999).

The collector, and therefore the web carried on to the collector, can travel relatively slowly, for instance 50 metres per minute, but preferably travels at speeds of at least 100 metres per minute, for instance up to 200 or 225 metres per minute or more. The rate of pouring melt on to the spinners and the speed of travel of the collector are selected so as to give the desired web weight.

The collector usually serves as the base of a collection chamber into which the cloud of fibres is blown by the air and suction through the collector pulls the fibres on to the collector. Numerous arrangements have been proposed and used. Traditionally the collecting chamber was relatively open to the atmosphere around the spinner or spinners and so there was free entry of air into the chamber. Traditionally the collector travels upwardly at an angle ranging from 20 to 45° to the horizontal and traditionally the spinner is often positioned somewhat above the collector, so that a significant proportion of the fibres travel downwards on to the upwardly travelling collector. In some processes, the whole apparatus was exposed to the atmosphere, i.e., without any collecting chamber. See for instance DE 3501897.

Operating such processes to provide wide thin webs rather than narrower thick webs (at the same rate of melt) does result in improved rolls, but the properties of such rolls are not as good as would be desired. Instead, it is preferred to conduct the process using apparatus in which the or each spinner is mounted in a duct which opens into a collecting chamber which is substantially closed to the entry of air except for primary air blasted through the or each spinner, secondary air which is controllably sucked through the or each duct and, optionally, non-interfering amounts of air sucked or forced through supplementary air passages into the chamber, and the fibres are collected on the collector by suction through the collector. Preferred processes of this general type are described in WO96/38391 and in WO01/23314 and to which reference should be made for full details of suitable spinners, collectors and collection chambers. In such processes there can be additional air inlets in the spinner end (or sides) of the chamber by which controlled amounts of air can be fed into the chamber.

For instance orifices may be positioned to control air flow patterns in the chamber by providing more air in certain positions (generally down each side of the chamber) than in others. There may be slots or other orifices down each side of the spinner adjacent to the walls of the chamber so as to allow additional secondary air to be blown or sucked into the chamber along the side walls in a controlled manner, i.e., so as to obtain an improvement in fibre lay down relative to what occurs in the absence of these extra orifices. This can reduce the risk of eddies along the outermost edges of the collector and improves fibre distribution.

It seems that the combination of controlled primary air and controllably induced secondary air without any deleteriously interfering random air supplies from the atmosphere results in a fibre orientation in the web which optimises the benefits of the invention.

The collector is preferably relatively steep, for instance making an angle of at least 45° to the horizontal at a position level with the lowermost rotor. Generally it makes an angle of at least 45° and usually 60 to 90°, or even 60 to 120°, to the horizontal at that level.

The area of the collector on which fibres are collected, as the collector travels through the collection chamber, can be observed visually and it is preferred that at least 70% of this area, and generally at least 80% or 90% of this area, is above the level of the axis of the lowermost rotor. Instead of or in addition to arranging that at least 70%, 80% or 90% of the area of the collector is above the level of the axis of the lower most rotor, the collector can be arranged such that at least 70%, 80% or 90% by weight of the fibres are collected on the collector at positions above the level of the axis of the lowermost rotor.

The collector is preferably relatively close to the spinner and generally the horizontal separation between the lowermost rotor and the collector is not more than 4 metres, generally around 1 to 3 metres.

The collector may be flat or it may be a cylindrical surface which rotates about a horizontal axis substantially transverse to the axis of the rotors. The cloud of fibres preferably travels direct to the collector, i.e., it is blown forward from the spinner by the primary and secondary air and this cloud travels direct on to the collector without passing through any confining passages. This avoids interference with the orientation of the fibres.

In traditional processes, the collector travels upwards and away from the cascade spinner as it collects the fibres from the cloud. Such collectors can be used in the invention. However best results are obtained when the collector travels towards the spinner as the collector moves through the area where fibre collection occurs.

As mentioned above, the preferred way of forming the wide primary web is by means of the combination of controlled primary air and controllably introduced secondary air, and a further aspect of the invention comprises the preferred process of making a web by this technique. The resultant web, containing bonding agent, is suitable as an intermediate in the manufacture of the novel rolls.

Accordingly, the invention includes a process for making a web of man-made vitreous fibres containing bonding agent comprising
pouring mineral melt onto the first rotor on one or more centrifugal cascade spinners arranged next to each other and each comprising a first rotor and one or more subsequent rotors wherein each rotor is mounted for rotation about a substantially horizontal axis whereby melt poured onto the first rotor is thrown onto the or each subsequent rotor in sequence and is thrown off the or each subsequent rotor, and optionally off the first rotor, as fibres,
controllably supplying the air around and through the or each spinner whereby the fibres are blown forward from the or each spinner as a cloud of fibres entrained in air substantially all of which is controllably supplied around and through the or each spinner,
collecting the fibres by suction on a collector in a collecting chamber which extends forwards from the or each spinner and which is substantially closed to the uncontrollably entry or escape of air,
causing the collector to travel within the collecting chamber from an initiating position where fibre collection initiates towards the spinner and to a finishing position where fibre collection finishes, and
the collected web is 4 to 8 metres wide.

This intermediate product can then be cross lapped, as described above and the cross lapped product cut and converted into a compressed roll as described above.

Since the final product is a bonded batt, curable binder is introduced into the cloud of fibres and is thus present in the collected web on the collector. The binder may be included in the cloud in conventional manner, for instance by spraying it from outside the cloud inwards but preferably some or all of the binder is introduced by being sprayed forwards from within the cascade spinner. For instance there may be a binder spray on the front end of one or more of the fiberising rotors.

The loose web is carried continuously away from the spinner and is then preferably cross lapped on to a batt conveyor which travels continuously under the cross lapping apparatus, in conventional manner. A suitable assembly is illustrated in WO99/51535.

Since the web is normally cross lapped without having been subjected to any significant consolidation process the web still has a very open texture at the time it is cross lapped and so the layers become entangled with each other, especially during subsequent processing steps. The resultant zig zag stack of layers is then subjected to compression and curing in conventional manner.

In the invention the batt is cut into elongated pieces before or during curing or, more usually after curing. The cutting into elongated pieces necessitates cutting the batt transversely to define the end edges and the length of the batt in the roll, generally at least 3 metres, and generally also lengthwise (i.e., in the length direction of the batt) to provide the side edges.

An advantage of the invention is that good physical properties can be obtained without the need for applying sheet reinforcement. However in some instances it is desirable to apply sheet reinforcement to at least one surface of the batt. This can be done in conventional manner, for instance by cross lapping the web or otherwise assembling the stack on to the reinforcing sheet carrying an adhesive, and then curing the sheet with the remainder of the batt.

The elongated pieces are rolled into compressed and packaged rolls in conventional manner. For instance each piece may be rolled tight with plastic film trapped between the layers of the roll, at least towards the end of the piece, and then sealed to itself after rolling, thereby trapping the roll in an envelope of plastic film. Other conventional methods of packaging the roll in its compressed state can be used.

The amount of compression of the roll is generally such that the thickness and volume of the roll is 10 to 50% of the norm volume of the batt. The extent of compression is typically from 50% to 90% based on the volume of the batt before rolling.

When the packaging is removed, the roll unwinds and expands back towards its original thickness. After the unwound batt has had an opportunity to equilibrate to a final thickness, and therefore a final density, the thickness is generally at least 50mm and usually at least 80 to 100mm. It is frequently up to 180 or 220mm and can be up to 250mm. The thickness of the batt before being compressed and rolled is likewise usually within the range 50mm to 250mm. Usually the thickness before rolling and compression is 5 to 20%, often around 10%, more than the desired thickness after unrolling and equilibration.

In this specification, thickness is determined by laying the product on a hard flat surface, laying a 200mm x 200mm pressure plate on the surface so as to apply a pressure of 50Pa and measuring the separation between the supporting surface and the plate. The measured thickness is the average of values taken at a number of points. The number of points is 5 when the roll is 2 metres long, 7 when 3 metres long and 9 when 4 metres long, with the points being distributed uniformly over the width of the roll but excluding the outer 150mm of the width.

The low density products of the invention are products which are usually described as having a nominal density of 5 to 50kg/m³ , and generally at least 10 or 20kg/m³ up to 40 or 45kg/m³ and most preferably 15 to 40kg/m³. Preferably the product after unrolling and equilibrating has a density in these ranges. The density is derived by calculation from the thickness, measured as above, and measurements of the surface area of the unrolled material and its mass.

Conventional compressed, low density, MMVF rolls provide a tensile strength of 3 to 4kN/m² in the length direction (along the Y axis) and 6 to 8 kN/m² in the cross direction (indexed to 30kg/m³ density and ignition loss 1.4%) but in the invention typical values can be from 5 to 7kN/m² in the length direction and 8 to 10kN/m² in the cross direction. These are for rock wool webs.

The tensile strength is determined by EN 1608 and is standardised to a density of 30kg/m³ and ignition loss 1.4%.

Another simple test is that the batt produced by unrolling a roll of the invention and having a length of 3 to 6 metres will normally support its own weight, without tearing, when held by hand at its opposite end corners.

The invention is illustrated in the accompanying drawings in which
Figure 1 is a diagrammatic illustration of an apparatus and process for forming the batt
Figure 2 is a diagrammatic illustration of another process for forming the web which can then be converted into a batt in substantially the same manner as in Figure 1
Figure 3 is a perspective view of the batt during manufacture and
Figure 4 is an end view of a roll according to the invention.

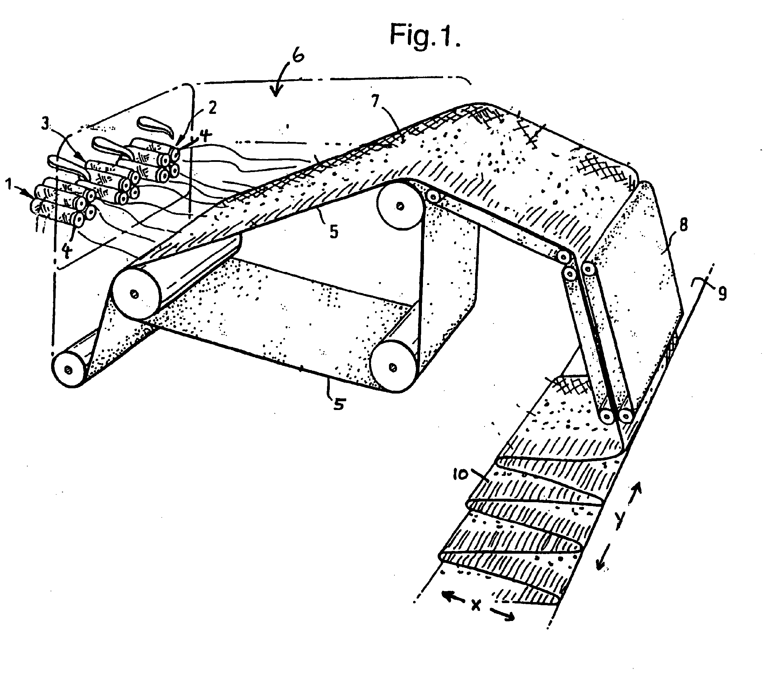

Referring to Figure 1, three cascade spinners 1, 2 and 3 each having four rotors are located in an end wall of a spinning chamber shown diagrammatically as 6, and discussed in more detail below. Melt is poured on to the top rotor in each spinner and is thereby fiberised in conventional manner into fibres which are carried forwards by primary air which is blasted forward as wall jets over the individual rotors and secondary air which is induced into the chamber around the spinners. Suction is applied through a continuously moving collector 5 whereby the fibres are deposited as a web 7 which is carried to a cross lapper 8 by which the web is cross lapped on to a conveyor 9, thereby forming a batt 10 which is continuously conveyed away from the cross lapping position.

The details of the air supplies and the construction of the chamber may be as described in more detail in WO96/38391.

The batt 10 is passed through rollers to compress it and cause intermeshing of the individual layers in the batt and is then passed through a curing oven to cure binder which is sprayed into the cloud of fibres from the cascade spinners 1, 2 and 3.

The collector 5 and the web 7 is generally 3 or 4 metres wide, up to 7 or 8 metres wide. The angle of the collector 5 to the horizontal can be about 30°, as shown in the drawings, but is preferably 45 to 90°, often around 50 to 80°. The collecting chamber is substantially closed, as described in WO96/38391.

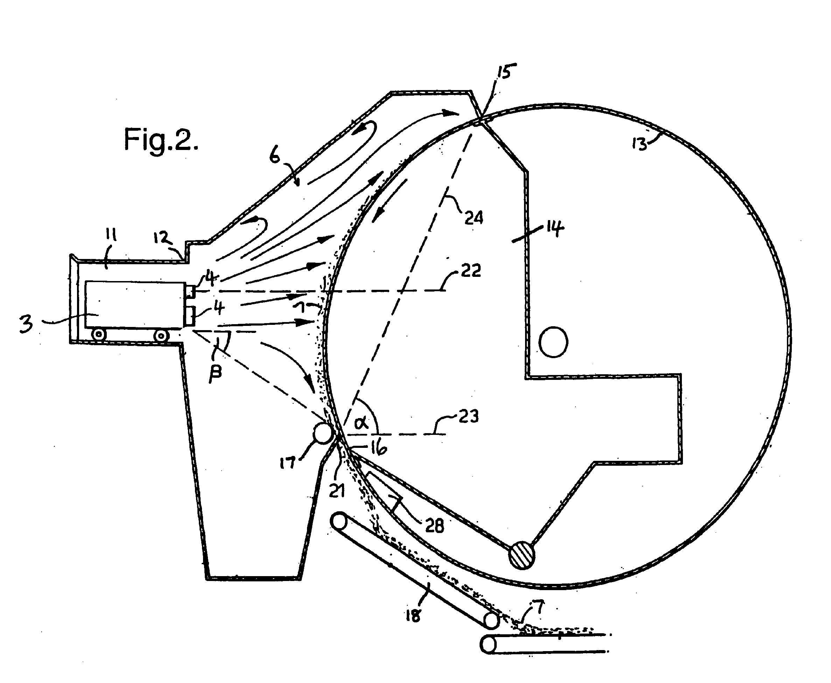

An alternative, and improved, system is shown in cross section through the longitudinal centre line of the apparatus in Figure 2. This shows the central spinner 3 mounted in an inlet duct 11 whereby the primary air forced passed the rotors 4 induces the entry of secondary air through the duct around the spinner 3 (and around the spinners 1 and 2 which are also arranged in the duct). This duct 11 opens into the end wall 12 of a spinning chamber 6 which is substantially closed against a cylindrical collecting drum 13 whereby the predominant amount of air entering the chamber enters as the primary air and the induced secondary air. However additional openings may be provided if desired in the chamber 6 to allow the entry of controlled amounts of other air.

For instance, as described in WO01/23314 filed even date herewith, slots can be provided down each side of the end wall of the collecting chamber adjacent to the spinners, either in the side walls or, more usually, in the end wall beyond the outer edges of the duct or ducts, and/or a slot can be provided beneath the duct or ducts. This can improve the air flow within the chamber.

The drum 13 is made of permeable mesh material and rotates anticlockwise over the suction area of a suction box 14, this suction area being defined by walls 15 and 16. Fibre collection therefore starts on the screen close to wall 15. The majority of the fibres will have collected on to the screen by the time it has rotated to be level with the lowermost rotor 4 but some further collection will continue down to the wall 16. A roller 17 presses against the web 7 which has collected on the screen so as to seal the web to prevent uncontrolled escape of air from the collection chamber at this point. The web 7 is taken off the rotating drum downwardly on to a conveyor 18 by which it is conveyed to the cross lapper 8, as in Figure 1. The angle β between a horizontal line extending from the lowermost edge of the lowermost rotor to the position 21 may range from a small angle above the horizontal up to a large angle of not more than about 50° below the horizontal, often it is around 0 to 30° below the horizontal. The angle α between the lines 23 and 24 marked in Figure 2 is usually at least 30°, and preferably at least 45°, up to around 80° or higher. Values of 50 to 70° are usually appropriate. The angle between the tangent at position 15 and the horizontal at that position is usually at least 10°, for instance 20 to 45°. A blow-off box 28 may be provided to assist in displacement of the web from the drum on to the conveyor 18.

The drum 13 is generally made of steel or other apertured sheet metal and typically rotates at a peripheral speed in the range 40 to 300, often 140 to 210, metres per minute. By this means the basis weight of the web can conveniently be at least 100g/m², often around 200 to 350g/m². Binder and other additives may be incorporated in the web in conventional manner. The drum typically has a radius of 2 to 6 metres, usually 3 to 5 metres and a distance from the spinners to the drum is usually at least 1 metre, typically 2 to 4 metres. The drum may have an axial length typically of 4 to 6 metres or even up to 8 metres.

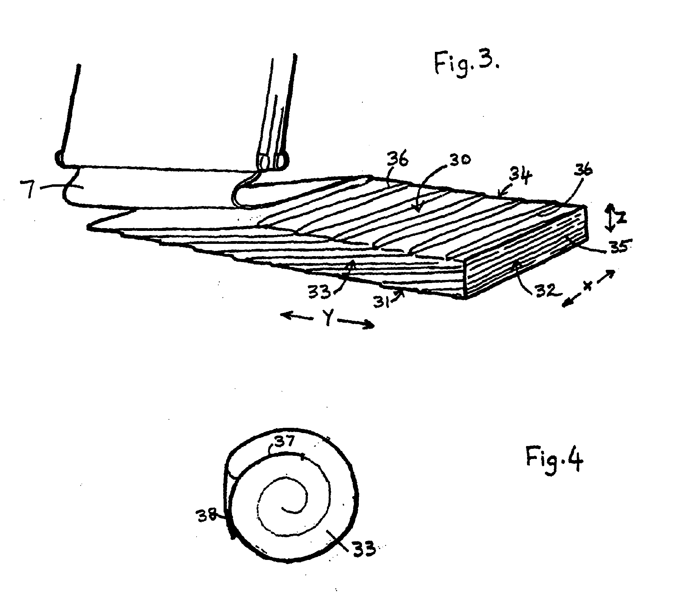

Figure 3 shows the construction of the batt in more detail. The batt has upper and lower faces 30 and 31, an end edge 32 formed by cutting the batt transversely and side edges 33 and 34 defined in Figure 3 by the edges which are formed by cross lapping the web, but in practice often the side edges 33, 34 are formed by cutting the batt in the length direction. The end edges 32 extend in the X direction and the side edges 33 and 34 extend in the Y direction.

The web 7 is cross lapped in the X direction as the conveyor 9 travels in the Y direction under the conveying position. As a result it can be seen that the end edges 35 in the cut end edge 32 are substantially parallel to the faces 30 and 31 whilst the uncut edges 36 of the layers extend between the side edges 33 and 34 at substantially regularly spaced apart positions, in a zig zag pattern. The number n is determined by counting the number of layers in the z direction of the stack and, if there is small variation from one point to another, averaging the result. In the illustration, the number n of layers in the thickness or Z direction is shown as 8 and the number of edges in the face in the illustrated length of 4 metres is 10, i.e., 2.5 per metre. Accordingly, in this product, the number of end edges is 0.31n per metre.

Figure 4 is an end view of a roll and shows the side edge 33 of the rolled and compressed batt held compressed in the roll by plastic wrapping 37 which is interleaved in the roll and secured on itself at position 38, so as to hold the roll in its compressed rolled configuration.

The width of the cross lapped product (ie.the dimension in the X direction) and the width of the conveyor 9, can be conventional, for instance, up to about 2 metres. However it can be very advantageous for the conveyor 9 and the width of the cross lapped batt to be wider than this, for instance above 3 metres typically 4 to 8 metres. This allows increased productivity and reduces the engineering problems due to the frequency of reciprocation of the cross lapper 8.

The following table summarises the results that are obtainable with various combinations of web widths, melt throughput and collector speed. In all examples the conditions of cross lapping and forming the batt on the conveyor were the same.

| Example | 1 | 2 | 3 | 4 | 5 | 6 | 7 |
|---|---|---|---|---|---|---|---|
| Gross wool kg/h | 5000 | 10000 | 10000 | 10000 | 15000 | 15000 | 20000 |
| Number of Spinners | 1 | 2 | 2 | 2 | 3 | 3 | 3 |
| Web width m | 2 | 2 | 4 | 4 | 4 | 4 | 4 |
| Web thickness g/m² | 250 | 500 | 500 | 250 | 376 | 376 | 500 |
| Web speed m/min | 166 | 166 | 83 | 166 | 166 | 166 | 166 |
| Batt area weight kg/m² | 3 | 3 | 3 | 3 | 3 | 2 | 3 |
| Batt number of layers | 12 | 6 | 6 | 12 | 8 | 5.3 | 6 |
| Batt number of end edges/m | 6 | 3 | 1.5 | 3 | 2 | 1.3 | 1.5 |

When compressed rolls are made and unwound from each of these, it is easily seen that example 3 gives better properties than example 2 and that example 4 gives even better properties. Further, it is easily seen that example 5 gives better properties than example 2 even though the production rate has increased by 50%. All these examples are more cost effective than example 1, because of its much lower production rate. Even example 7, with its very high production rate, gives rolls having better properties than example 2.

## Claims

1. A compressed and packaged roll of bonded, low density, man-made vitreous fibre (MMVF) batt which has upper and lower faces (30, 31) which extend in the X and Y axes separated by the thickness of the batt extending in the Z axis, end edges (32) extending substantially along the X axis and side edges (33, 34) extending substantially along the Y axis and which is formed of a cured entangled stack of layers (7) each of which is formed of a continuous cross lapped, air laid MMVF web (7) including a bonding agent, and wherein
the side edges of the layers are inclined to the faces and define the side edges (33, 34) of the batt
the end edges (32) of the batt are defined by end edges (35) of the layers and these end edges (35) are substantially parallel to the faces (30, 31)
other end edges (36) of the layers extend between the side edges across the faces (30, 31) at substantially regularly spaced apart positions,
and the axis of the roll extends substantially along the X axis
**characterised in that** the number of end edges (36) in each face (30, 31) is 0.4n or less, per metre, where n is the average number of layers in the Z axis.

2. A roll according to claim 1 in which the number of end edges in each face is below 0.36n per metre.

3. A roll according to claim 1 or claim 2 in which n is at least 5.

4. A roll according to any preceding claim in which the number of end edges in each face is from 0.167n to 0.333n and n is from 6 to 25.

5. A roll according to any preceding claim in which each layer has a weight of below 550g/m², preferably 100 to 400g/m².

6. A roll according to any preceding claim in which the batt has a length of at least 3 metres, and preferably at least 4 metres, and at least one, of the layers extends the entire length of the batt from one end edge to the other.

7. A roll according to any preceding claim in which at least two of the layers extend the entire length of the batt from one end edge to the other.

8. A roll according to any preceding claim in which the batt after unrolling and equilibration has a thickness of 50 to 250mm (preferably 80 to 180mm) and a density of 5 to 50kg/m³ (preferably 15 to 40kg/m³).

9. A roll according to any preceding claim in which the layers are provided by a substantially continuous, cross-lapped, web.

10. A process for the manufacture of web useful as an intermediate in the production of a roll according to claim 1, the process comprising
pouring mineral melt onto the first rotor of one or more centrifugal cascade spinners arranged next to each other, and each comprising a first rotor and one or more subsequent rotors wherein each rotor is mounted for rotation about a substantially horizontal axis and whereby melt poured onto the first rotor is thrown onto the or each subsequent rotor in sequence and is thrown off the or each subsequent rotor and optionally off the first rotor as fibres,
controllably supplying air around and through the or each spinner whereby the fibres are blown forward from the or each spinner as a cloud of fibres entrained in air,
collecting the fibres as a web by suction on a collector in a collecting chamber which extends forwards from the spinner and which is substantially closed to the uncontrolled entry or escape of air whereby substantially all of the air in which the cloud of fibres is entrained is supplied around and through the spinner,
causing the collector to travel within the collecting chamber from an initiating position where fibre collection initiates towards the spinner and to a finishing position where fibre collection finishes,
and wherein the width of the web which is collected on the collector and is removed from the collector is 4 to 8 metres.

11. A process of making compressed and packaged rolls of bonded, low density, man-made vitreous fibre batt the process comprising
pouring mineral melt onto the first rotor of one or more centrifugal cascade spinners (1, 2, 3) each comprising a first rotor (4) and one or more subsequent rotors (4) which are rotating about substantially horizontal axes and thereby forming a cloud of fibres,
including curable binder in the cloud,
carrying the cloud forwards from the spinner in a stream of air,
collecting the cloud of fibres as a web (7) on a substantially continuous moving collector (5, 13) and transporting the web to a cross lapping position (8),
cross lapping a plurality of layers of the web while substantially continuously conveying the resultant batt (10) away from the cross lapping position along the Y axis of the batt, wherein the batt has X, Y and Z axes wherein the X axis extends across the width of the batt when it is on the collector, the Y axis is the axis along which the batt is conveyed substantially continuously and the Z axis is in the thickness direction,
curing the binder,
cutting the batt (10) before, during or after curing, into pieces having a length L metres along the Y axis, and
compressing and rolling the cured pieces into rolls whose axes extend substantially along the x axis of the batt and packaging each roll while compressed,
**characterised in that** the web and the collector assembly both have a width of at least L, and L is at least 3 metres, preferably 4 to 8 metres.

12. A process according to claim 11 in which the number n of layers in the Z axis of the stack is at least 5, preferably 6 to 25.

13. A process according to any of claims 10 to 12 in which the melt is poured onto the first rotors of at least two of the centrifugal cascade spinners arranged in side-by-side relationship, and the melt is poured onto the first rotors at a combined rate of at least 10 tons per hour, preferably 14 to 25 tons per hour.

14. A process according to any of claims 10 to 13 in which the collector and the web travel at a speed of from 50 to 250 metres per minute (preferably 100 to 200 metres per minute) and the web has a weight of below 550g/m², preferably 100 to 400g/m² and the batt, before rolling and compression, has a density of 5 to 50kg/m³.

15. A process according to any of claims 10 to 13 in which the or each spinner is mounted in a duct which opens into a collecting chamber which is substantially closed to the entry or air except for primary air blasted through the or each spinner, secondary air which is controllably sucked through the or each duct and, optionally, other air controllably sucked or forced through supplementary air passages into the chamber, and the fibres are collected on the collector by suction through the collector.

16. A process according to claim 15 in which the collector travels towards the or each cascade spinner over the distance where the collector collects substantially all the fibres in the web.

17. A process according to claim 15 or claim 16 in which the collector has a cylindrical surface wherein the cylinder has an axis which is substantially horizontal and is substantially perpendicular to the axes of the rotors.

18. A process according to any of claims 15 to 17 in which the collector, at the level of the axis of the lowermost rotor of the or each cascade spinner is at an angle of above 45° to the horizontal.

19. A process according to any of claims 15 to 18 in which the closest point of the collector to the or each spinner is not more than 3 metres from the or each spinner.

20. A process according to claim 11 in which the cross lapped batt has a width of 3 to 8 metres.

21. A process according to claim 11 in which the rolls are rolls according to any of claims 1 to 9.

## Patentansprüche

1. Komprimierte und gepackte Rolle von einem gebundenen künstlichen glasartigen Faser (MMVF)-Vlies niedriger Dichte, das obere und untere Seiten (30, 31), die sich in den X- und Y-Achsen erstrecken, getrennt durch die sich in der Z-Achse erstreckende Dicke des Vlieses, Endränder (32), die sich im wesentlichen entlang der X-Achse erstrecken, und Seitenränder (33, 34), die sich im wesentlichen entlang der Y-Achse erstrecken, aufweist und das aus einem gehärteten verfilzten Stapel von Schichten (7) gebildet ist, die jeweils aus einer im Luftstrom gelegten MMVF-Endlosbahn (7) enthaltend ein Bindemittel gebildet sind, wobei
die Seitenränder der Schichten zu den Seiten schräg stehen und die Seitenränder (33, 34) des Vlieses definieren,
die Endränder (32) des Vlieses durch Endränder (35) der Schichten definiert sind und diese Endränder (35) im wesentlichen parallel zu den Seiten (30, 31) sind,
sich andere Endränder (36) der Schichten zwischen den Seitenrändern über die Seiten (30, 31) an im wesentlichen regelmäßig beabstandeten Positionen erstrecken,
und die Achse der Rolle sich im wesentlichen entlang der X-Richtung erstreckt,
**dadurch gekennzeichnet, dass** die Zahl der Endränder (36) in jeder Seite (30, 31) 0,4n oder weniger pro Meter beträgt, wobei n die durchschnittliche Zahl von Schichten in der Z-Achse ist.

2. Rolle nach Anspruch 1, bei der die Zahl der Endränder in jeder Seite unter 0,36n pro Meter beträgt.

3. Rolle nach Anspruch 1 oder Anspruch 2, bei der n mindestens 5 ist.

4. Rolle nach irgendeinem vorhergehenden Anspruch, bei der die Zahl der Endränder in jeder Seite von 0,167n bis 0,333n beträgt und n von 6 bis 25 ist.

5. Rolle nach irgendeinem vorhergehenden Anspruch, bei der jede Schicht ein Gewicht von unter 550 g/m², bevorzugt 100 bis 400 g/m², aufweist.

6. Rolle nach irgendeinem vorhergehenden Anspruch, bei der das Vlies eine Länge von mindestens 3 Metern und bevorzugt mindestens 4 Metern aufweist und sich mindestens eine der Schichten über die ganze Länge des Vlieses von einem Endrand zu dem anderen erstreckt.

7. Rolle nach irgendeinem vorhergehenden Anspruch, bei der sich mindestens zwei der Schichten über die ganze Länge des Vlieses von einem Endrand zu dem anderen erstrecken.

8. Rolle nach irgendeinem vorhergehenden Anspruch, bei der das Vlies nach Aufrollen und Gleichgewichtsausbildung eine Dicke von 50 bis 250 mm (bevorzugt 80 bis 180 mm) und eine Dichte von 5 bis 50 kg/m³ (bevorzugt 15 bis 40 kg/m³) aufweist.

9. Rolle nach irgendeinem vorhergehenden Anspruch, bei der die Schichten durch eine im wesentlichen kontinuierliche, kreuzweise aufeinandergelegte Bahn bereitgestellt werden.

10. Verfahren zur Herstellung einer Bahn, die als Zwischenprodukt bei der Herstellung einer Rolle nach Anspruch 1 geeignet ist, wobei das Verfahren umfasst
das Gießen von mineralischer Schmelze auf den ersten Rotor von einer oder mehreren Zentrifugal-Kaskadenschleudervorrichtungen, die nebeneinander angeordnet sind, jeweils umfassend einen ersten Rotor und einen oder mehrere folgende Rotoren, wobei jeder Rotor zur Rotation um eine im wesentlichen horizontale Achse montiert ist, wodurch Schmelze, die auf den ersten Rotor gegossen wird, auf den oder jeden folgenden Rotor der Reihe nach geworfen wird und von dem oder jedem folgenden Rotor und gegebenenfalls von dem ersten Rotor als Fasern abgeschleudert wird,
das regulierbare Zuführen von Luft um und durch die oder jede Schleudervorrichtung, wodurch die Fasern von der oder jeder Schleudervorrichtung nach vorne als Wolke aus von Luft mitgeführten Fasern geblasen werden,
das Sammeln der Fasern als Bahn durch Saugen auf eine Sammelvorrichtung in einer Sammelkammer, die sich von der Schleudervorrichtung nach vorne erstreckt und gegenüber dem ungesteuerten Eintritt oder Austritt von Luft im wesentlichen geschlossen ist, wodurch im wesentlichen die ganze Luft, von der die Wolke von Fasern mitgeführt wird, um und durch die Schleudervorrichtung zugeführt wird,
das Transportieren der Sammelvorrichtung innerhalb der Sammelkammer von einer Anfangsposition, wo die Fasersammlung beginnt, in Richtung der Schleudervorrichtung und zu einer Endposition, wo die Fasersammlung endet,
und wobei die Breite der Bahn, die auf der Sammelvorrichtung gesammelt wird und aus der Sammelvorrichtung entfernt wird, 4 bis 8 Meter ist.

11. Verfahren zur Herstellung von komprimierten und gepackten Rollen von einem gebundenen künstlichen glasartigen Faservlies niedriger Dichte, wobei das Verfahren umfasst
das Gießen von mineralischer Schmelze auf den ersten Rotor von einer oder mehreren Zentrifugal-Kaskadenschleudervorrichtungen (1, 2, 3), die jeweils einen ersten Rotor (4) und einen oder mehrere folgende Rotoren (4) umfassen, die um im wesentlichen horizontale Achsen rotieren und **dadurch** eine Wolke von Fasern bilden,
die Aufnahme von härtbarem Bindemittel in der Wolke,
das Befördern der Wolke von der Schleudervorrichtung vorwärts in einem Luftstrom,
das Sammeln der Wolke aus Fasern als eine Bahn (7) auf einer sich im wesentlich kontinuierlich bewegenden Sammelvorrichtung (5, 13) und das Transportieren der Bahn zu einer Stelle des kreuzweise Aufeinanderlegens (8),
das kreuzweise Aufeinanderlegen einer Mehrzahl von Schichten der Bahn, während das sich ergebende Vlies (10) im wesentlichen kontinuierlich weg von der Stelle des kreuzweise Aufeinanderlegens entlang der Y-Achse des Vlieses befördert wird, wobei das Vlies X-, Y- und Z-Achsen aufweist, wobei die X-Achse sich über die Breite des Vlieses erstreckt, wenn es sich auf der Sammelvorrichtung befindet, die Y-Achse die Achse ist, entlang der das Vlies im wesentlichen kontinuierlich befördert wird, und die Z-Achse in der Dickenrichtung ist,
das Härten des Bindemittels,
das Schneiden des Vlieses (10) vor, während oder nach dem Härten in Stücke mit einer Länge von L Metern entlang der Y-Achse und
das Komprimieren und Rollen der gehärteten Stücke zu Rollen, deren Achsen sich im wesentlichen entlang der X-Achse des Vlieses erstrecken, und das Verpacken jeder Rolle im komprimierten Zustand,
**dadurch gekennzeichnet, dass** die Bahn und die Sammelvorrichtungsanordnung beide eine Breite von mindestens L aufweisen und L mindestens 3 Meter, bevorzugt 4 bis 8 Meter ist.

12. Verfahren nach Anspruch 11, bei dem die Zahl n der Schichten in der Z-Achse des Stapels mindestens 5, bevorzugt 6 bis 25, beträgt.

13. Verfahren nach irgendeinem der Ansprüche 10 bis 12, bei dem die Schmelze auf die ersten Rotoren von mindestens zwei der Zentrifugal-Kaskadenschleudervorrichtungen, die in einer Seite-an-Seite-Beziehung angeordnet sind, gegossen wird und die Schmelze mit einer gemeinsamen Rate von mindestens 10 Tonnen pro Stunde, bevorzugt 14 bis 25 Tonnen pro Stunde, auf die ersten Rotoren gegossen wird.

14. Verfahren nach irgendeinem der Ansprüche 10 bis 13, bei dem die Sammelvorrichtung und die Bahn sich mit einer Geschwindigkeit von 50 bis 250 m pro min (bevorzugt 100 bis 200 m pro min) bewegen und die Bahn ein Gewicht von unter 550 g/m², bevorzugt 100 bis 400 g/m², aufweist und das Vlies vor dem Rollen und Komprimieren eine Dichte von 5 bis 50 kg/m³ aufweist.

15. Verfahren nach irgendeinem der Ansprüche 10 bis 13, bei dem die oder jede Schleudervorrichtung in einem Kanal montiert ist, der sich zu einer Sammelkammer öffnet, die gegenüber dem Eintritt von Luft im wesentlichen verschlossen ist, außer für primäre Luft, die durch die oder jede Schleudervorrichtung geblasen wird, für sekundäre Luft, die regulierbar durch den oder jeden Kanal gesaugt wird, und gegebenenfalls für andere Luft, die regulierbar durch Durchgänge für Ergänzungsluft in die Kammer gesaugt oder gedrückt wird, und die Fasern auf der Sammelvorrichtung durch Saugen durch die Sammelvorrichtung gesammelt werden.

16. Verfahren nach Anspruch 15, bei dem die Sammelvorrichtung sich in Richtung der oder jeder Kaskadenschleudervorrichtung über die Distanz bewegt, wo die Sammelvorrichtung im wesentlichen die ganzen Fasern in der Bahn sammelt.

17. Verfahren nach Anspruch 15 oder Anspruch 16, bei dem die Sammelvorrichtung eine zylindrische Oberfläche aufweist, wobei der Zylinder eine Achse aufweist, die im wesentlichen horizontal ist und die im wesentlichen vertikal zu den Achsen der Rotoren ist.

18. Verfahren nach irgendeinem der Ansprüche 15 bis 17, bei dem die Sammelvorrichtung auf dem Niveau der Achse des untersten Rotors der oder jeder Kaskadenschleudervorrichtung in einem Winkel von über 45° zur Horizontalen vorliegt.

19. Verfahren nach irgendeinem der Ansprüche 15 bis 18, bei dem der nächste Punkt der Sammelvorrichtung zu der oder jeder Schleudervorrichtung nicht mehr als 3 Meter von der oder jeder Schleudervorrichtung entfernt ist.

20. Verfahren nach Anspruch 11, bei dem das kreuzweise aufeinandergelegte Vlies eine Breite von 3 bis 8 Metern aufweist.

21. Verfahren nach Anspruch 11, bei dem die Rollen Rollen nach irgendeinem der Ansprüche 1 bis 9 sind.

## Revendications

1. Rouleau compressé et emballé d'isolant en natte de fibres vitreuses synthétiques reliées à faible densité (MMVF) qui a des faces supérieure et inférieure (30, 31) qui s'étendent sur les axes X et Y séparés par l'épaisseur de l'isolant en natte s'étendant sur l'axe Z, des bords d'extrémité (32) s'étendant sensiblement le long de l'axe X et des bords latéraux (33, 34) s'étendant sensiblement le long de l'axe Y et qui est formé avec une pile enchevêtrée durcie de couches (7), dont chacune est formée avec une bande MMVF Air-Laid croisée continue (7) comprenant un agent de liaison, et dans lequel :
les bords latéraux des couches sont inclinés vers les faces et définissent des bords latéraux (33, 34) de l'isolant en natte ;
les bords d'extrémité (32) de l'isolant en natte sont définis par des bords d'extrémité (35) des couches et ces bords d'extrémité (35) sont sensiblement parallèles aux faces (30, 31),
les autres bords d'extrémité (36) des couches s'étendent entre les bords latéraux sur les faces (30, 31) à des positions espacées de manière sensiblement régulière,
et l'axe du rouleau s'étend sensiblement le long de l'axe X,
**caractérisé en ce que** le nombre de bords d'extrémité (36) dans chaque face (30, 31) est de 0,4n ou moins par mètre, où n est le nombre moyen de couches dans l'axe Z.

2. Rouleau selon la revendication 1, dans lequel le nombre de bords d'extrémité dans chaque face est inférieur à 0,36 n par mètre.

3. Rouleau selon la revendication 1 ou la revendication 2, dans lequel n est au moins 5.

4. Rouleau selon l'une quelconque des revendications précédentes, dans lequel le nombre de bords d'extrémité dans chaque face est de l'ordre de 0,167n à 0,333n et n est de l'ordre de 6 à 25.

5. Rouleau selon l'une quelconque des revendications précédentes, dans lequel chaque couche a un poids inférieur à 550 g/m², de préférence de 100 à 400 g/m².

6. Rouleau selon l'une quelconque des revendications précédentes, dans lequel l'isolant en natte a une longueur d'au moins 3 mètres et de préférence d'au moins 4 mètres, et au moins l'une des couches s'étend sur toute la longueur de l'isolant en natte d'un bord d'extrémité à l'autre.

7. Rouleau selon l'une quelconque des revendications précédentes, dans lequel au moins deux des couches s'étendent sur toute la longueur de l'isolant en natte d'un bord d'extrémité à l'autre.

8. Rouleau selon l'une quelconque des revendications précédentes, dans lequel l'isolant en natte après déroulement et équilibrage a une épaisseur de 50 à 250 mm (de préférence de 80 à 180 mm) et une densité de 5 à 50 kg/m³ (de préférence de 15 à 40 kg/m³) .

9. Rouleau selon l'une quelconque des revendications précédentes, dans lequel les couches sont fournies par une bande croisée sensiblement continue.

10. Procédé pour la fabrication de la bande utile en tant qu'intermédiaire dans la production d'un rouleau selon la revendication 1, le procédé comprenant les étapes consistant à :
verser la matière fondue minérale sur un premier rotor d'un ou de plusieurs filateurs centrifuges en cascade agencés à proximité les uns des autres, et comprenant chacun un premier rotor et un ou plusieurs rotors successifs, dans lequel chaque rotor est monté en rotation autour d'un axe sensiblement horizontal et moyennant quoi la matière fondue versée sur le premier rotor est projetée sur le ou chaque rotor successif en séquence, et est retirée du ou chaque rotor successif et facultativement hors du premier rotor sous forme de fibres,
alimenter de manière contrôlée l'air autour et à travers le ou chaque filateur, moyennant quoi les fibres sont soufflées vers l'avant à partir du ou chaque filateur sous forme de nuage de fibres entraîné dans l'air,
collecter les fibres sous forme de bande par aspiration sur un collecteur dans une chambre de collecte qui s'étend vers l'avant à partir du filateur et qui est sensiblement fermée pour l'entrée ou la fuite incontrôlée de l'air, moyennant quoi sensiblement la totalité de l'air dans lequel le nuage de fibres est entraîné, est alimentée autour et à travers le filateur,
amener le collecteur à se déplacer dans la chambre de collecte à partir d'une position d'initiation dans laquelle la collecte de fibres commence vers le filateur et jusqu'à une position de finition dans laquelle la collecte de fibres se termine,
et dans lequel la largeur de la bande qui est collectée sur le collecteur et est retirée du collecteur est de 4 à 8 mètres.

11. Procédé pour fabriquer des rouleaux compressés et emballés d'isolant en natte de fibres vitreuses synthétiques reliées à faible densité, le procédé comprenant les étapes consistant à :
verser la matière fondue minérale sur le premier rotor d'un ou de plusieurs filateurs centrifuges en cascade (1, 2, 3), chacun comprenant un premier rotor (4) et un ou plusieurs rotors successifs (4) qui sont entraînés en rotation autour d'axes sensiblement horizontaux et formant ainsi un nuage de fibres,
introduire le liant durcissable dans le nuage,
transporter le nuage vers l'avant à partir du filateur dans un flux d'air,
collecter le nuage de fibres sous forme de bande (7) sur un collecteur (5, 13) se déplaçant de manière sensiblement continue et transporter la bande dans une position de croisement (8),
croiser une pluralité de couches de la bande tout en transportant de manière sensiblement continue l'isolant en natte (10) résultant à distance de la position de croisement le long de l'axe Y de l'isolant en natte, dans lequel l'isolant en natte a des axes X, Y et Z, dans lequel l'axe Y s'étend sur la largeur de l'isolant en natte lorsqu'il se trouve sur le collecteur, l'axe Y est l'axe le long duquel l'isolant en natte est transporté de manière sensiblement continue et l'axe Z est dans le sens de l'épaisseur,
faire durcir le liant,
couper l'isolant en natte (10) avant, pendant ou après le durcissement, en morceaux ayant une longueur L en mètres le long de l'axe Y, et
compresser et enrouler les morceaux durcis en rouleaux dont les axes s'étendent sensiblement le long de l'axe X de l'isolant en natte et emballer chaque rouleau une fois une fois compressé,
**caractérisé en ce que** la bande et l'ensemble de collecteur ont tous deux une largeur d'au moins L, et L est d'au moins 3 mètres, de préférence 4 à 8 mètres.

12. Procédé selon la revendication 11, dans lequel le nombre n de couches dans l'axe Z de la pile est d'au moins 5, de préférence de 6 à 25.

13. Procédé selon l'une quelconque des revendications 10 à 12, dans lequel la matière fondue est versée sur les premiers rotors d'au moins deux des filateurs centrifuges en cascade agencés selon une relation côte à côte, et la matière fondue est versée sur les premiers rotors à une vitesse combinée d'au moins 10 tonnes par heure, de préférence de 14 à 25 tonnes par heure.

14. Procédé selon l'une quelconque des revendications 10 à 13, dans lequel le collecteur et la bande se déplacent à une vitesse de 50 à 250 mètres par minute (de préférence de 100 à 200 mètres par minute) et la bande a un poids inférieur à 550 g/m², de préférence de 100 à 400 g/m², et l'isolant en natte, après enroulement et compression, a une densité de 5 à 50 kg/m³.

15. Procédé selon l'une quelconque des revendications 10 à 13, dans lequel le ou chaque filateur est monté dans un conduit qui s'ouvre dans une chambre de collecte qui est sensiblement fermée pour l'entrée de l'air, excepté pour l'air principal soufflé à travers le ou chaque filateur, l'air secondaire qui est aspiré de manière contrôlable à travers le ou chaque conduit et facultativement, un autre air aspiré ou forcé de manière contrôlable à travers des passages d'air supplémentaires dans la chambre, et les fibres sont collectées sur le collecteur par aspiration à travers le collecteur.

16. Procédé selon la revendication 15, dans lequel le collecteur se déplace vers le ou chaque filateur en cascade sur la distance sur laquelle le collecteur collecte sensiblement toutes les fibres dans la bande.

17. Procédé selon la revendication 15 ou la revendication 16, dans lequel le collecteur a une surface cylindrique dans laquelle le cylindre a un axe qui est sensiblement horizontal et est sensiblement perpendiculaire aux axes des rotors.

18. Procédé selon l'une quelconque des revendications 15 à 17, dans lequel le collecteur, au niveau de l'axe du rotor le plus bas du ou chaque filateur en cascade est à un angle supérieur à 45° par rapport à l'horizontale.

19. Procédé selon l'une quelconque des revendications 15 à 18, dans lequel le point le plus proche du collecteur par rapport à ou chaque filateur n'est pas supérieur à 3 mètres du ou chaque filateur.

20. Procédé selon la revendication 11, dans lequel l'isolant en natte croisée a une largeur de 3 à 8 mètres.

21. Procédé selon la revendication 11, dans lequel les rouleaux sont des rouleaux selon l'une quelconque des revendications 1 à 9.
